# EUROPEAN PATENT SPECIFICATION

(11) **EP 2 289 788 B1**
(45) Date of publication and mention of the grant of the patent: **18.07.2012**
(21) Application number: 10167716.9
(22) Date of filing: 29.06.2010
(51) Int. Cl.: B62K 11/14, B62J 99/00

(54) **Motorcycle comprising a meter unit**
Motorrad mit einer Messeinheit
Motocyclette comprenant un panneau d'affichage

(30) Priority: 27.08.2009 JP 2009196732
(43) Date of publication of application: 02.03.2011
(73) Proprietor: Honda Motor Co., Ltd., Tokyo 107-8556 (JP)
(72) Inventor: Inose, Koji, Wako-shi Saitama 351-0193 (JP)
(74) Representative: Liska, Horst

(56) References cited:
- EP-A1- 1 643 262
- EP-A1- 1 970 243
- EP-A2- 1 447 282

## Description

### Technical Field

This invention relates to a motorcycle comprising a meter unit, and more particularly to a motorcycle comprising a meter unit that is capable of giving a novel external shape.

### Background Art

Among conventional saddle-mounting vehicles including motorcycles, what is provided with a sub-cover covering the part between the external circumference of the meter unit and the periphery of the opening of the handlebar cover on which the meter unit is to be fitted is described in Japanese patent document No. JP-A-2006-96106, for instance. According to this background art, when the external shape of the meter unit is to be altered to achieve a novel appearance, adaptation to the external reshaping of the meter unit is possible only by changing the sub-cover but the handlebar cover need not be changed, and therefore adaptation to reshaping of the meter unit can be easily accomplished.

A motorcycle comprising a meter unit according to the preamble of claim 1 is known from EP 1 643 262 A1, EP 1 447 282 A2 or EP 1 970 243 A1.

### Technical Problem

Generally, items provided with a digital display on the display face of the meter unit may have various operational switches including a resetting switch for the trip meter unit and a clock setting switch in addition to a speedometer, a fuel gauge and the like. Since these switches are provided as electrical switches on the meter board, it is easier for electrical meter arrangement to dispose the switches within the display face of the meter unit, but disposing such switches within the display face of the meter unit may cause the dial plate constituting the display face and the switches visually to melt together and to become less readable by the rider. However, any known sub-cover such as the one described in Japanese patent document No. JP-A-2006-96106 has only been adaptable to external reshaping of the meter unit, embodying no consideration for the convenience of use of the meter unit within the display face area.

An object of this invention is to provide a motorcycle comprising a meter unit that is capable of giving a novel external shape of the meter unit and enabling the operating ease of switches on the display face to be enhanced.

### Solution to Problem

This object is achieved by a motorcycle according to claim 1. In accordance with the present invention there is provided a motorcycle as set out in claim 1. Preferred embodiments of the present invention are laid down in the appended dependent claims 2-6.

The invention has its first characteristic in that a motorcycle comprising a meter unit comprises meter cases; a dial plate of instruments disposed in the meter cases; digital displays disposed on the dial plate; and a lens fitted to the meter cases and covering an upper surface of the dial plate to constitute a display face region, wherein the meter cases are arranged in an opening for meters provided in a handlebar cover covering a handlebar for steering the vehicle, the meter cases include opaque parts that extend toward the lens and extends into the display face region, and switch manipulating elements for varying the mode of displaying on the digital displays are fitted to the opaque parts.

Furthermore, the switch manipulating elements are intended for use in manipulating switches which are provided on a circuit board arranged underneath the dial plate and the meter unit further comprises rods positioned below lower ends of the switch manipulating elements and above detection sections of the switches to intervene between the switch manipulating elements and the switches, and the opaque parts include reverse parts which are turned over toward the dial plate and cover flanks of the rod.

The invention also has its second characteristic in that the meter cases include a cylindrical upper case including the opaque parts and a lower case which is joined to a bottom end of the upper case and whose upper surface is open, and the lens is jointed to an upper end of the upper case.

The invention also has its third characteristic in that the dial plate is common to multiple instruments and display regions of the multiple instruments are partitioned by the opaque parts.

The invention also has its fourth characteristic in that a notch is disposed in a part of the dial plate, and the rod and a supporting member thereof extend vertically through the notch.

The invention also has its fifth characteristic in that the multiple instruments include a first instrument and second and third instruments arranged apart from each other left and right ahead of the first instrument, and one of the opaque parts is disposed between the first instrument and the second instrument, and another of the opaque parts is disposed between the first instrument and the third instrument.

Further, the invention has its sixth characteristic in that the handlebar cover has an oil level check opening for a brake master cylinder; the oil level check opening is disposed at the bottom of a dent formed in the handlebar cover; and external shapes of the opaque parts are continuous to surrounding crest lines constituting the dent.

### Advantageous Effects of Invention

According to the invention having the first characteristic, as the meter cases have opaque parts bulging out toward the lens fitted over the meter cases and the switch manipulating elements are disposed in these opaque parts, the upper surface of the meter unit, namely the display face, can be given a novel external shape by merely varying the shape of the opaque parts without having to vary the external shape of the meter unit. Furthermore, even if the switch manipulating elements are disposed within the display face region, the dial plate and the switch manipulating elements can be readily distinguished from each other by the opaque parts, making it possible to enhance the ease of use. Also, as the manipulating elements can be arranged by positively utilizing the space within the display face region, the size of the meter unit can be reduced.

Furthermore, since the rod as an operation transmitting member between the switch manipulating elements and switches are hidden by the reverse parts of the opaque parts, the external appearance of the dial plate vicinities as seen through the lens is improved.

Furthermore, according to the invention having the second characteristic, it can be made unnecessary to directly fit the switch manipulating elements to the lens which is a fragile member and furthermore the lens is fitted to the upper case by joining, there is no need to fasten together the lens and the lower case, resulting in enhanced durability or the lens.

Furthermore, according to the invention having the third characteristic, when multiple items of information including the vehicle speed, cooling water temperature and remaining oil amount are to be indicated on the meter unit, as the display region can be partitioned by the opaque parts, the visibility of each individual instrument can be enhanced where a common dial plate is used.

Furthermore, according to the invention having the fourth characteristic, where the switch manipulating elements are to be arranged in a region inward from the outer circumference of the dial plate, as the substructures of the switch manipulating elements (namely the rod and the supporting member of the rod) can be arranged in the notch in the dial plate, assembling ease is enhanced.

Also, according to the invention having the fifth characteristic, where multiple switch manipulating elements are provided by arranging opaque parts separated to the left and right over the upper surface of the meter unit, the individual switch manipulating elements can be readily distinguished from one another.

Also, according to the invention having the sixth characteristic, by giving continuity to the external shape of the opaque parts from the crest lines of bent parts of the handlebar cover, a novel appearance giving a sense of integration between the opaque parts and the handlebar cover can be provided. This enables an impression as if the switch manipulating elements were arranged over a separate component from the meter unit to be given.

### Brief Description of Drawings

Fig. 1 is a top view of the essential part of the motorcycle including the meter unit pertaining to one example of embodiment of the invention.
Fig. 2 is a left profile of the essential part of the motorcycle including the meter unit pertaining to the example of embodiment of the invention.
Fig. 3 is a front perspective view of the essential part of the motorcycle including the meter unit pertaining to one example of embodiment of the invention.
Fig. 4 is a rear perspective view of the essential part of the motorcycle including the meter unit pertaining to one example of embodiment of the invention.
Fig. 5 is a left profile of the essential part of the motorcycle including the meter unit pertaining to one example of embodiment of the invention.
Fig. 6 is a rear perspective view of the essential part of the motorcycle excluding a meter visor.
Fig. 7 is a left front perspective view of the essential part of the motorcycle excluding a front cover.
Fig. 8 is a cross-sectional view of a boss for screwing formed in the front cover.
Fig. 9 is a cross-sectional view of an example of joint part between the front cover and a rear cover.
Fig. 10 is a cross-sectional view of the area in which the bosses of the front cover and the bosses of the rear cover oppose each other.
Fig. 11 is a front view of the meter unit.
Fig. 12 is a bottom a bottom view of the meter unit.
Fig. 13 is a cross-sectional view between arrows A and A in Fig. 11.
Fig. 14 is a cross-sectional view between arrows B and B in Fig. 11.
Fig. 15 is a cross-sectional view between arrows C and C in Fig. 11.
Fig. 16 is a cross-sectional view between arrows D and D in Fig. 11.
Fig. 17 is a cross-sectional view between arrows E and E in Fig. 11.
Fig. 18 is a cross-sectional view between arrows F and F in Fig. 11.
Fig. 19 is a perspective view of the rear left part of the meter visor.
Fig. 20 is a cross-sectional profile of the head lamp.
Fig. 21 is a plan of the essential part of the dial plate.

### Description of Embodiments

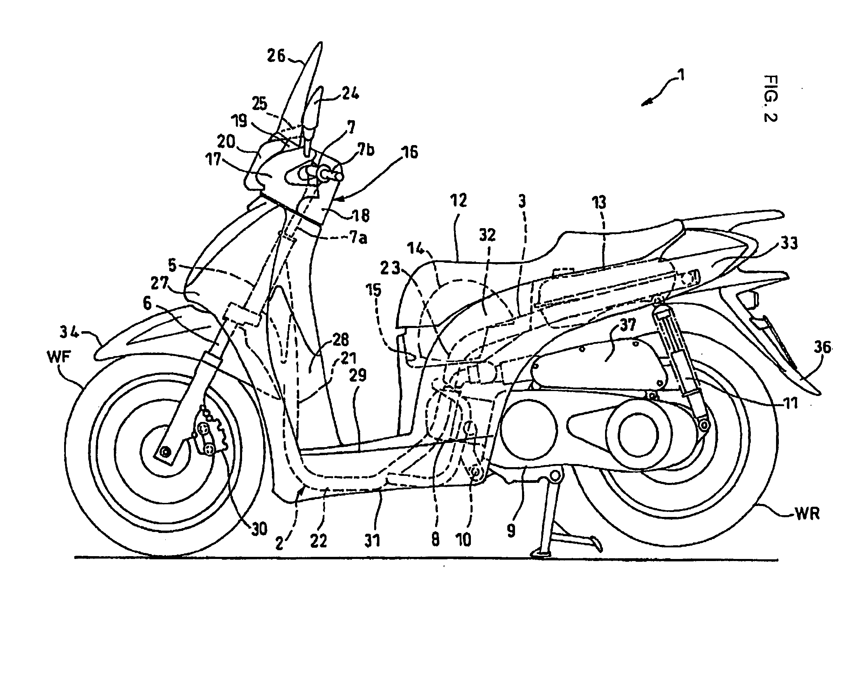

One example of embodiment of the invention will be described below with reference to drawings. Fig. 2 is a left profile of a scooter type motorcycle having a meter unit pertaining to the example of the invention. Incidentally, unless otherwise stated, the forward, backward, left, right and other directions in the following description are the same as the respectively corresponding ones of the vehicle.

In Fig. 2, the body frame of a motorcycle 1 has a main frame 2 and a seat rail 3. The main frame 2 is a U-profiled body having an upright part 21 whose forward end is joined to a head pipe 5 positioned in the forward part of the body, a horizontal part 22 extending horizontally from the upright part 21 and a slant part 23 extending back upward from the horizontal part 22. The forward end of the seat rail 3 is joined to the slant part 23 of this main frame 2.

The head pipe 5 rotatably supports a steering shaft 7a to whose lower end a front fork 6 is coupled, a front wheel WF is journaled to the lower end of the front fork 6, and a handlebar 7 is fitted to the upper end of the steering shaft 7a. A grip 7b is fitted to each of the two ends of the handlebar 7. Behind the main frame 2, a power unit 9 in front of which an engine 8 is provided is supported to be oscillable up and down by an axle 10, and the rear part of the power unit 9 is linked to a rear cushion 11 suspended from the seat rail 3.

The power unit 9 is provided with a transmission and a reduction gear, not shown, having known configurations for speed transmission and speed reduction, and a rear wheel WR is fitted to the output shaft (not shown) of the reduction gear. Tandem seats 12 integrally formed of a rider's seat and a pillion are mounted on the seat rail 3. Underneath the tandem seats 12 a fuel tank 13 is arranged, and also is arranged a store box 15 into which a helmet 14 can be stored.

The handlebar 7 is covered by a handlebar cover 16 all around except the grip parts at the left and right ends. The handlebar cover 16 has a front cover and a rear cover 18 to be described in detail afterwards, a head lamp 20 is built into the front cover 17, and a meter unit (to be described afterwards) is incorporated into the rear cover 18. The front cover 17 of the handlebar cover 16 has a head lamp opening for fitting the head lamp 20, and in the rear cover 18 a meter unit opening for fitting the meter unit is formed.

On the two sides (two flanks) of meter unit and the head lamp 20, a pair of left and right sub-covers 19 formed separately from the front cover 17 and the rear cover 18 are disposed. Namely, the front cover 17, the rear cover 18 and the sub-covers 19 are separate parts from one another. The sub-covers 19 are components that so extend in a range from the front cover 17 to the rear cover 18 that their front and rear ends adjoin the meter unit and the head lamp 20 arranged separately in the front and rear parts of the body.

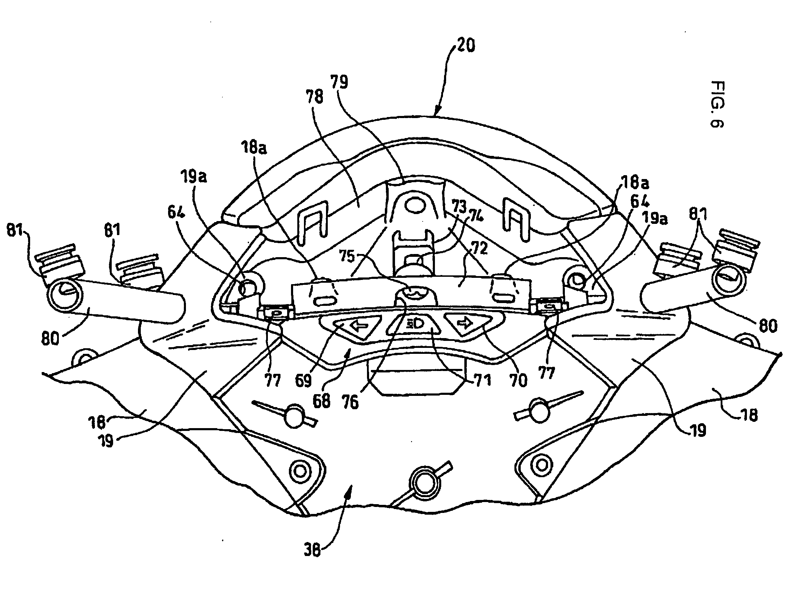

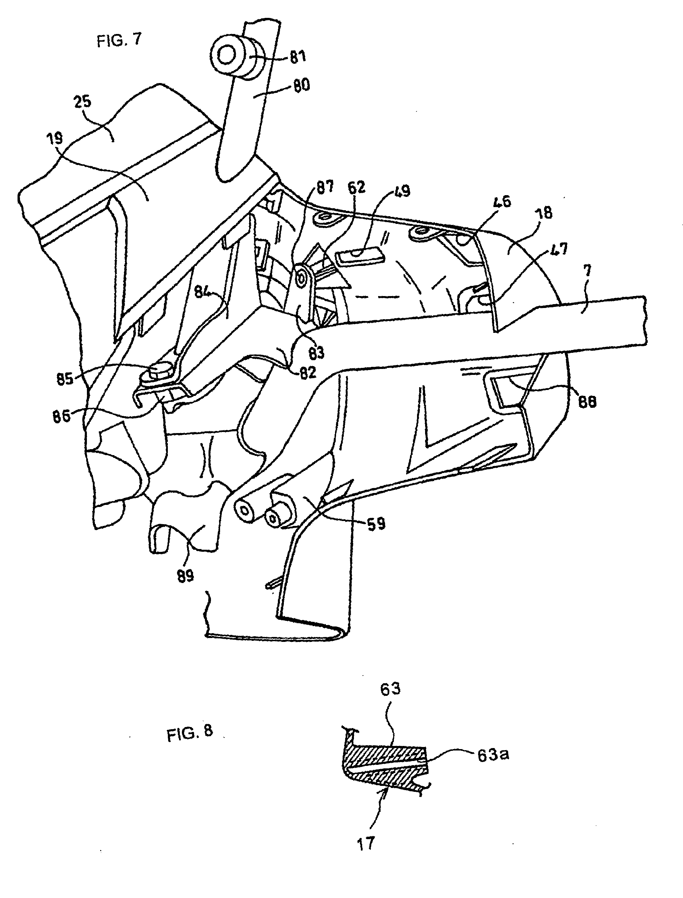

Mirrors 24 are arranged at the left and right ends of the front cover 17, and a wind screen 26 is arranged over a meter visor 25 that is in contact with the upper sides of the head lamp 20 and the meter unit. This wind screen 26 is fitted to a pair of left and right wind screen stays (to be described afterwards with reference to Figs. 6 and 7) disposed vertically penetrating the sub-covers 19.

A front cover 27 and a leg shield 28 partially surrounding the head pipe 5 and the main frame 2 are provided, and a step floor 29 and an under cover 31 surrounding the rest of the main frame 2 are provided. Also, body side covers 32 and a body rear cover 33 surrounding the seat rail 3 are provided.

A brake caliper 30 is disposed on the front fork 6. A front fender 34 is provided over the front wheel WF, and a rear fender 36 is provided over the rear wheel WR. An air cleaner 37 for cleaning the air let into the engine 8 is arranged above the power unit 9.

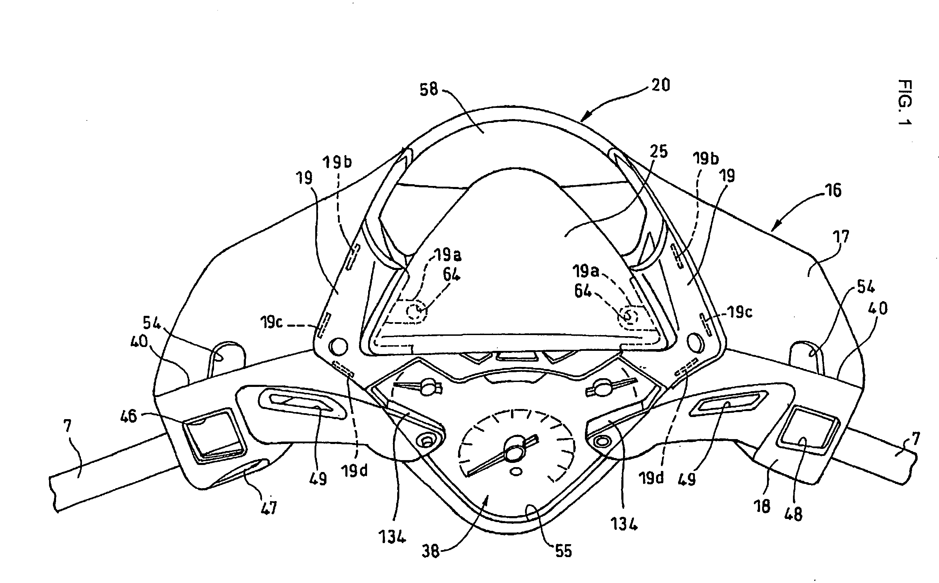

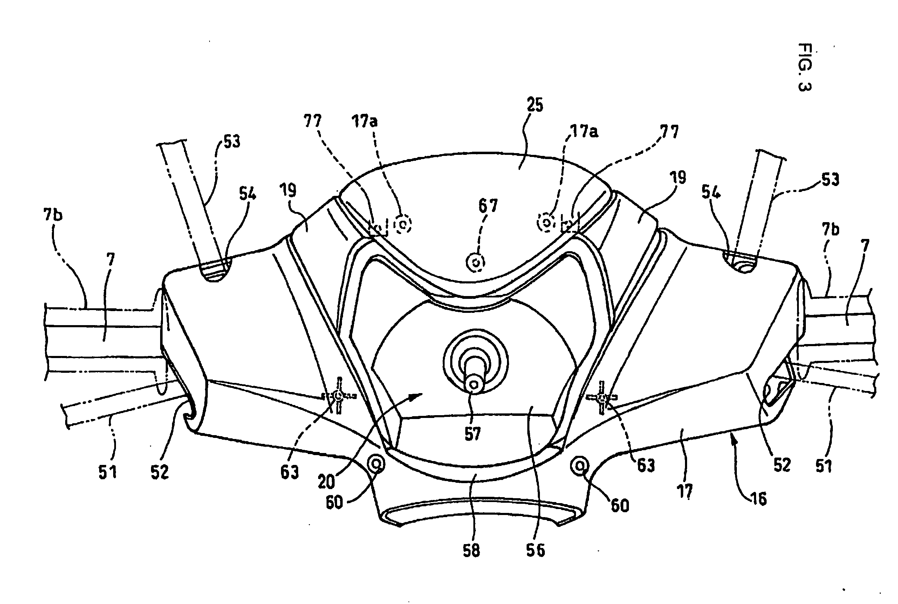

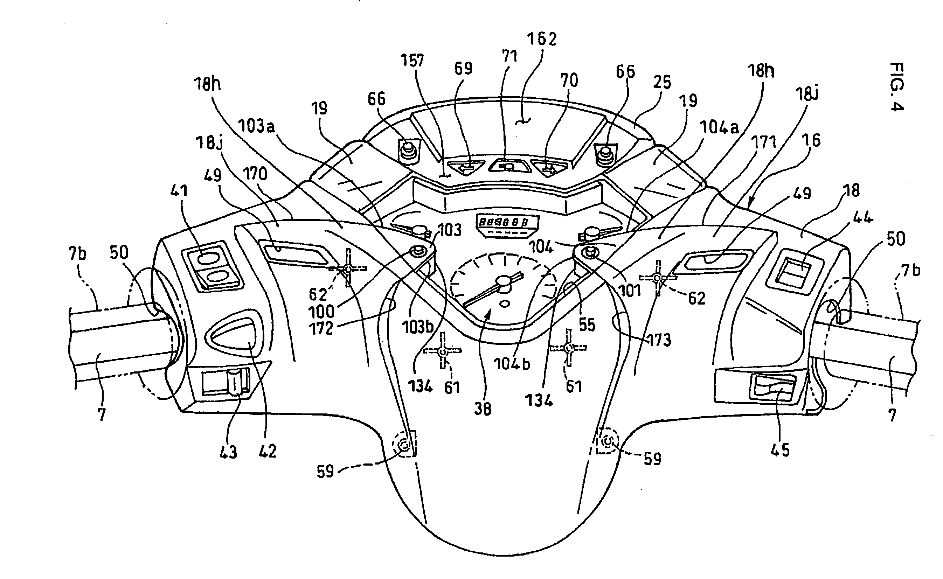

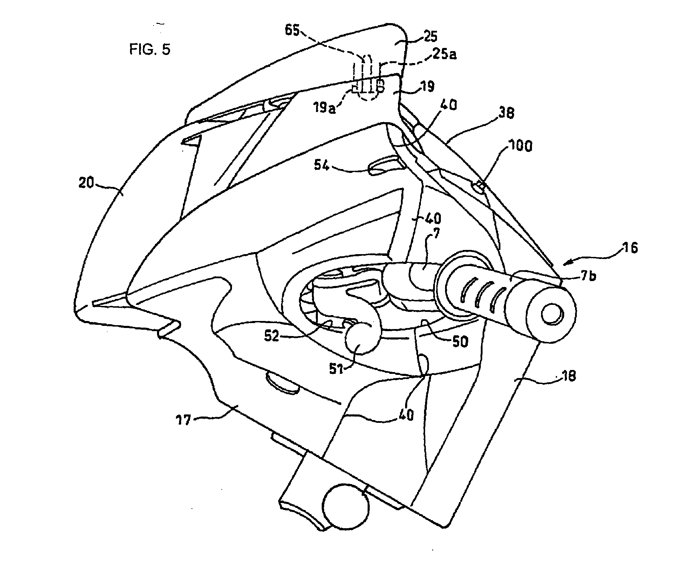

Next, the essential part of the motorcycle, namely the handlebar and the elements around it will be described in detail with reference to drawings. Fig. 1 is a top view of the essential part of the motorcycle 1 including the handlebar cover 16; Fig. 3, a front perspective view of the same; Fig. 4, a rear perspective view of the same; and Fig. 5, a left profile of the same. In these drawings, the same reference signs denote respectively the same parts. The handlebar cover 16 has the front cover 17 and the rear cover 18, and the sub-covers 19, the head lamp 20, a meter unit 38 and the meter visor 25 are fitted to the handlebar cover 16. The rear end of the front cover 17 and the front end of the rear cover 18 are butted against each other to constitute a border line 40 (see Fig. 1 and Fig. 5).

Further, as shown in Fig. 1, the left and right external side surfaces of the sub-covers 19 face the front cover 17 and the rear cover 18, and their front end surfaces oppose the left and right upper end surfaces of the head lamp 20. On the other hand, their left and right internal side surfaces face side surfaces of the meter visor 25, and their rear end surfaces oppose the left and right front end surfaces of the meter unit 38. In other words, the sub-covers 19 are arranged adjacent to the front and rear covers 17 and 18, the head lamp 20, the meter unit 38 and the meter visor 25.

Thus, some degree of integration is achieved among mutually separate components including the front cover 17 and the rear cover 18 constituting the handlebar cover 16 together with the head lamp 20, the meter unit 38 and the meter visor 25 by providing the sub-covers 19 which adjoin every one of them. In particular, by so positioning the front and rear parts of the sub-covers 19 as to abut face to face on the head lamp 20 and meter unit 19, a feel of integration can be given to these components arranged apart from each other in the front-to-rear direction of the body.

The border line 40 of the front cover 17 and the rear cover 18 form a peak (or an edge) line as the front inclined surface of the front cover 17 and the rear inclined surface of the rear cover 18 meet each other, and the sub-covers 19 also form a chevron having a peak in its profile (see Fig. 5).

In Fig. 4, on the left side part of the rear cover 18, a dimmer switch 41, a horn switch 42, and a turn signal switch 43 are provided in the descending order. Further, on the right side part of the rear cover 18, an engine stop switch 44 and a starter switch 45 are provided in the upper and lower positions, respectively. These switches 41 through 45 are so fitted that the manipulating elements of the switches are oriented backward, namely toward the rider sitting on the seat 12 through openings formed in the rear cover 18.

Fig. 1 shows the handlebar cover 16 before being fitted with the switches 41 through 45; out of the openings formed in the rear cover 18 to fit the switches 41 through 45, an opening 46 for the dimmer switch 41, an opening 47 for the horn switch 42 and an opening 48 for the engine stop switch 44 are seen. In the rear cover 18, openings 49 and 49 for checking the oil in a master cylinder (not shown) that supplies brake oil to a brake are formed.

Openings 50 for the handlebar are formed to enable the handlebar 7 to penetrate the left and right flanks of the rear cover 18 and to protrude on both the left and right sides (see Fig. 4). The grips 7b and 7b are fitted to the grip parts of the handlebar 7 (see Fig. 3).

Also, openings 52 for brake levers are formed to enable brake levers 51 to penetrate the left and right flanks of the front cover 17 as shown in Fig. 3 and Fig. 5 and to protrude on both left and right sides. Further, openings 54 permitting penetration of mirror stays 53 that support the mirrors 24 are formed behind the front cover 17. These openings are U-shaped, opening toward the border line 40.

The rear cover 18 has a V-shaped edge 55 which is narrow in the rear part (lower part in the drawings) and expanded in left-to-right width toward the forward part (upper part in the figures) as shown in Fig. 1 and Fig. 4 and, together with the edge of a bridge 72 (see Fig. 6) to be described afterwards, forms an opening for fitting the meter unit. And the meter unit 38 is so arranged as to keep its rear surface (lower flank in the figures) along this V-shaped edge 55.

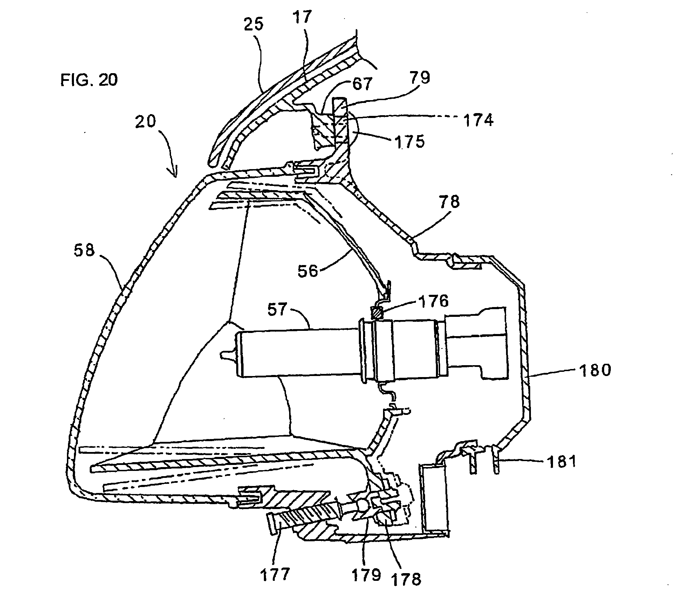

In Fig. 3, the upper edge of the head lamp 20 abuts face to face on the front edges of the meter visor 25 and the sub-covers 19, and its left, right and bottom parts abut face to face on the front cover 17. The head lamp 20 is provided with a reflector 56, and a bulb 57 is arranged in the focal position of the reflector 56. The front surface of the head lamp 20 is covered with a lens 58. The lens 58, as can be understood from Fig. 20, has a lens surface the upper end of which is positioned behind the lower end. In the front cover 17 and the rear cover 18, bosses for use in putting the covers together and bosses for use in coupling each of the covers to the head lamp 20 and the meter unit 38 are formed.

The part of the handlebar cover 16 toward the lower end is formed in a cylindrical body to surround the steering shaft 7a. In Fig. 4, bosses 59 protruding toward the front cover 17 are formed toward the lower end of the rear cover 18 constituting the rear half of the cylindrical body of the handlebar cover 16. And as shown in Fig. 3, dents 60 having holes permitting penetration of set-screws toward the rear cover 18 are formed in the front cover 17 in the positions respectively opposite the bosses 59 in the rear cover 18.

Bosses 63 protruding toward the rear cover 18 are formed on the parts of the front cover 17 to the left and right of the head lamp 20. Set-screws (not shown) that allow brackets (not shown) protruding to the left and right from the head lamp 20 to be inserted from the rear cover 18 are screwed into these bosses 63. Also on the front cover 17, bosses 17a protruding toward the rear cover 18 are formed, and the tips of bosses 18a (to be described afterwards) protruding from the rear cover 18 toward the front cover 17 are opposed to these bosses 17a. Further in the front cover 17, a boss 67 into which a set-screw (to be described afterwards with reference to Fig. 20) that can pass through a hole in a bracket 79 formed above the head lamp 20 is to be screwed is formed.

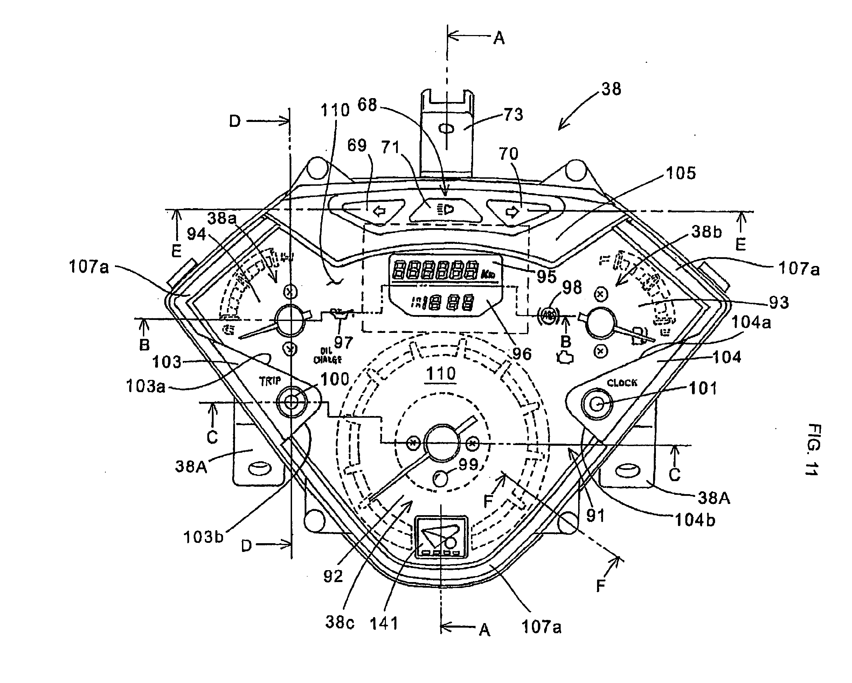

In Fig. 4, in the rear cover 18, bosses 61 protruding toward the meter unit 38 are formed in positions matching the rear side walls of the meter unit 38. Into these bosses 61, set-screws that can be inserted into holes in stays 38A (to be described afterwards with reference to Fig. 11) formed in the meter unit 38 from the meter unit 38 side are screwed. Further in the rear cover 18, bosses 62 protruding toward the front cover 17 are formed adjoining oil level check openings 49. These bosses 62 are provided to join the rear cover 18 to the handlebar 7 (the manner of joining to be described afterwards with reference to Fig. 7).

The meter visor 25 is fitted to the rear cover 18 with two set-screws 66. As shown in Fig. 3, the rear cover 18 is provided with a pair of left and right stays 77 having threaded holes into which the set-screws 66 are screwed (see Fig. 3 and Fig. 6).

Fig. 6 is a rear perspective view of the handlebar cover 16 in a state in which the meter visor 25 and the front cover 17 are taken off, and Fig. 7, a perspective view of the interior of the essential part of the rear cover 18, wherein the same reference signs as in Figs. 1 through 5 denote respectively the same elements. In Fig. 1, Fig. 5, and Fig. 6, the sub-covers 19 have stays 19a bulging out to the side facing the meter visor 25 and have hanging-down pawls 19b, 19c, and 19d bulging out downward on the sides facing the front cover 17 and the rear cover 18. The stays 19a have holes 64, set-screws 65 are passed through these holes 64 from underneath as shown in Fig. 5, and these set-screws 65 are screwed into bosses 25a provided in the meter visor 25 to join the sub-covers 19 to the meter visor 25. On the edges of the front cover 17 that face the left and right external sides of the sub-covers 19, two grooves not shown are formed in positions where the hanging-down pawls 19b and 19c can be inserted from above, and on the edge of the rear cover 18 one groove not shown is formed in a position where the hanging-down pawls 19d can be inserted from above. Therefore, an assembly integrating the meter visor 25 and the sub-covers 19 can be engaged with a front case 17 and a rear case 18 by inserting the hanging-down pawls 19b, 19c and 19d from above into the respectively matching grooves in the front case 17 and the rear case 18.

In Fig. 6, an indicator displaying section 68 is disposed above the meter unit 38. The indicator displaying section 68 is provided with turn signal indicators 69 and 70 arranged in one row in the left-right direction and the lighting state indicator 71 of the head lamp 20 arranged between the turn signal indicators 69 and 70.

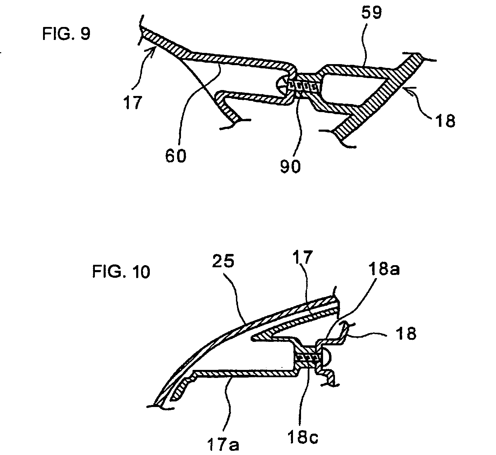

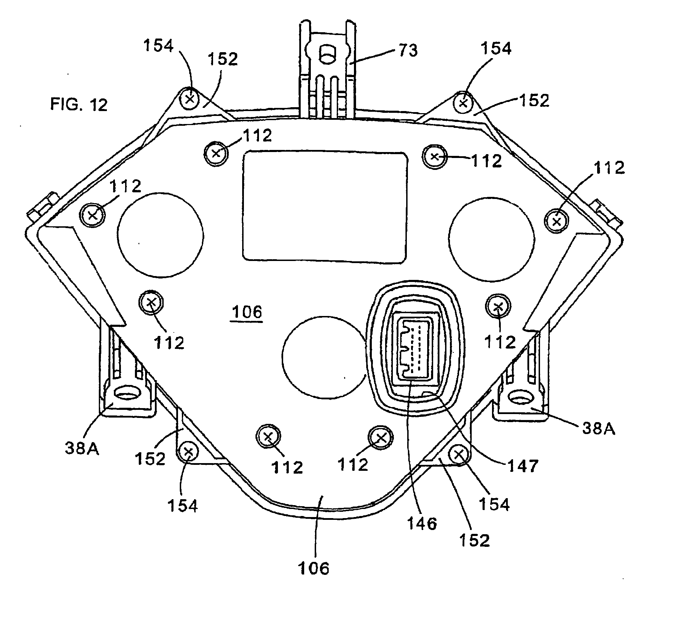

A part of the rear cover 18 has the bridge 72 extending from the left and right parts of the meter unit 38 toward the central part and crosses the area ahead of the indicator displaying section 68, and this bridge 72 is formed by the forward protrusion of a boss 74 to be used for joining the bridge 72 to the stay 73 (to be described afterwards with reference to Fig. 12) of the lower case 106 of the meter unit 38. The bridge 72 is provided with a hole 76 to let a set-screw 75 that penetrates the boss 74 and is screwed into the stay 73 and the bosses 18a disposed in two positions and having holes to allow set-screws (see Fig. 10) to penetrate to join the meter visor 25 to the bridge 72.

Farther outside the bosses 18a and 18a on the left and right, the stays 77 and 77 are erected. These stays 77 have screw holes for fitting the meter visor 25 to the rear cover 18 with the set-screws 66 and 66 (see Fig. 4).

From a head lamp housing 78 constituting part of the head lamp 20, the bracket 79 for fitting the housing 78 to the meter visor 25 protruded. Also, in each of the sub-covers 19, a wind screen stay 80 to support the wind screen 26 is provided penetrating it. The wind screen stays 80 has studs 81 in four positions forward for fitting the wind screen 26.

In Fig. 7, a bracket 82 is joined forward to the handlebar 7, and to the bracket 82, extending farther upward, another bracket 83 is joined. At the bottom end of the wind screen stays 80 penetrating the sub-covers 19, brackets 84 are joined and, by bolting these brackets 84 to the bracket 82 on the handlebar side, the wind screen 26 is joined to the handlebar 7. Reference sign 85 denotes a bolt inserted from the bracket 84 side, and reference sign 86, a nut joined to the bottom face of the bracket 82,

The bracket 83 opposes the front end face of the bosses 62 formed in the rear cover 18 and, by screwing a set-screw 87 into the bosses 62 through the bracket 83, the rear cover 18 is joined to the handlebar 7. Reference sign 88 denotes a fitting hole for the turn signal switch 43. Further, reference sign 89 denotes a linking member for linking the handlebar 7 to the steering shaft 7a.

Fig. 8 is a cross-sectional view of the bosses 63 of the front cover 17. Holes 63a to let set-screws (tapping screws) be screwed into are formed in the bosses 63.

Fig. 9 is a cross-sectional view of the dents 60 formed in the front cover 17, wherein the bosses 59 of the rear cover 18 are also shown. In the bottoms of the dents 60 of the front cover 17, holes permitting penetration of set-screws 90 are formed, while threaded holes to allow these set-screws 90 to be screwed in are formed in the bosses 59 formed in the rear cover 18. Therefore, the front cover 17 and the rear cover 18 can be joined together by inserting the set-screws 90 from the front cover 17 side and screwing them into the rear cover 18.

Fig. 10 is a cross-sectional view of the area in which the bosses 17a of the front cover 17 and the bosses 18a of the rear cover oppose each other. In Fig. 10, in the part of the front cover 17 covered by the meter visor 25, the bosses 17a protrude toward the rear cover 18. The tips of these bosses 17a oppose the tips of the bosses 18a formed on the rear cover 18 side. Holes permitting penetration of set-screws 18c are in the bosses 18a on the rear cover 18 side, and threaded holes to allow the set-screws 18c to be screwed in are formed in the bosses 17a on the front cover 17 side. This configuration enables the set-screws 18c to be screwed into the threaded holes of the bosses 17a from the rear cover 18 side through the bosses 18a and thereby to join the front cover 17 and the rear cover 18.

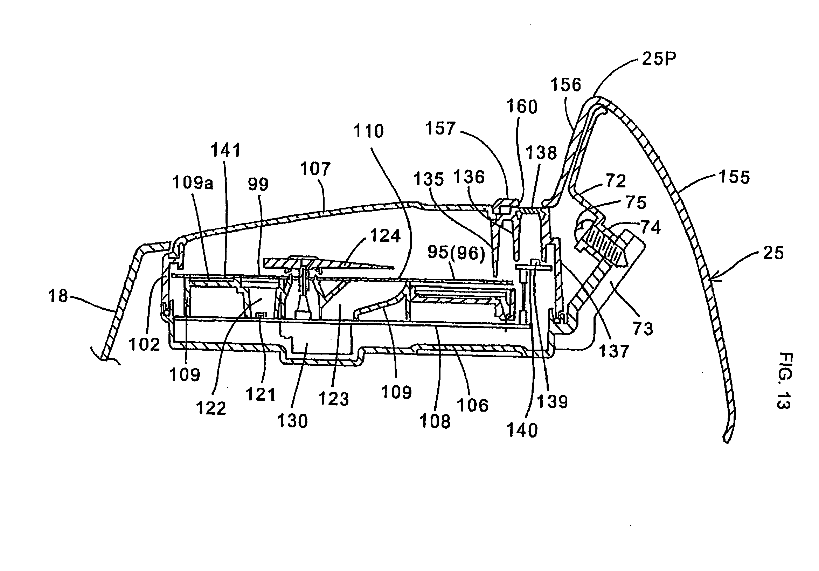

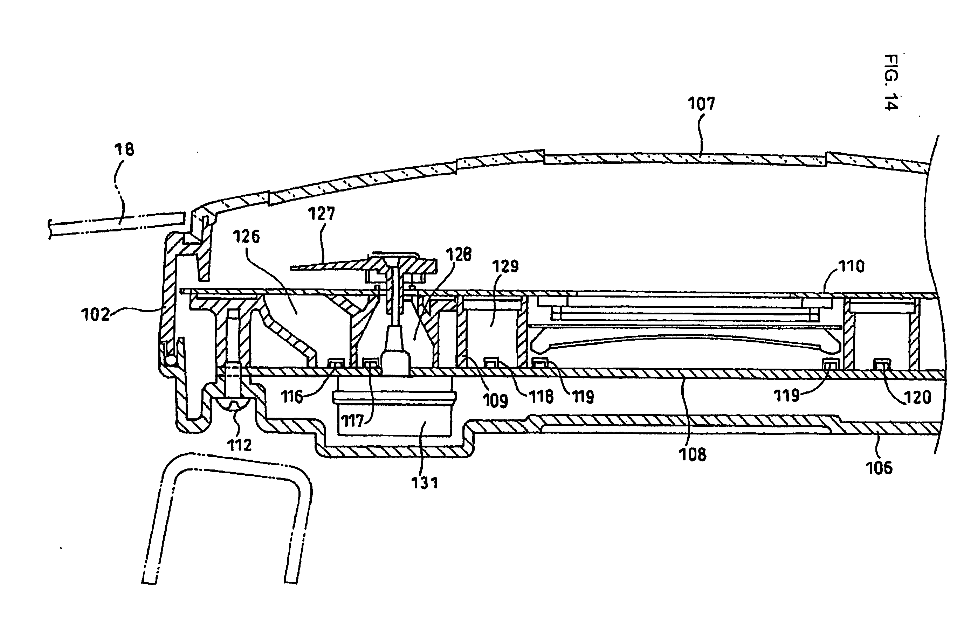

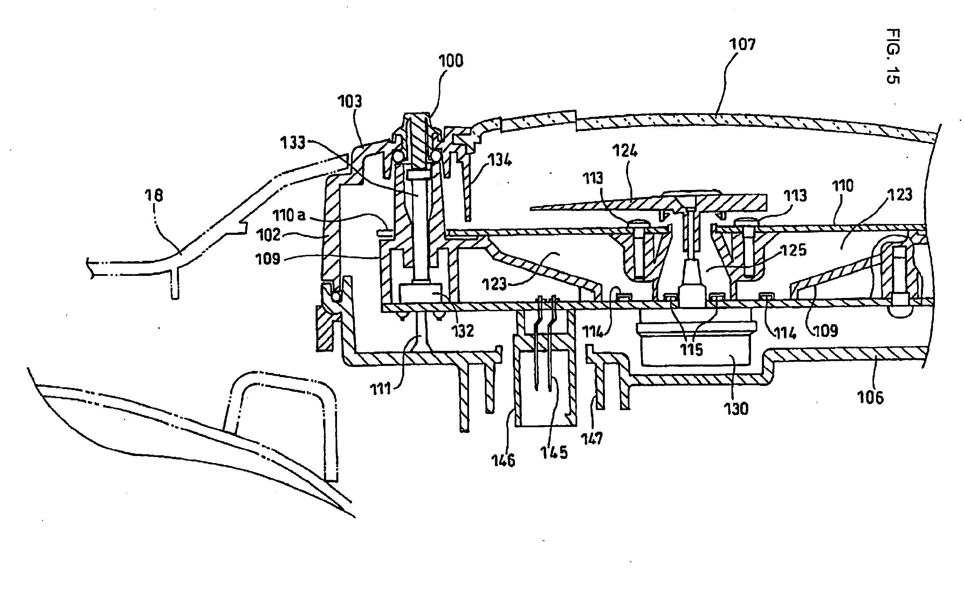

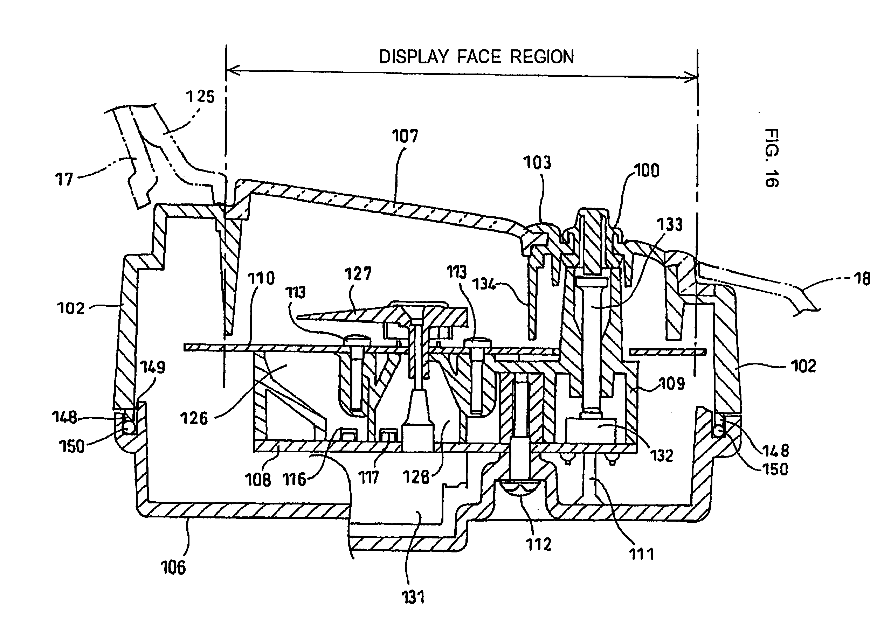

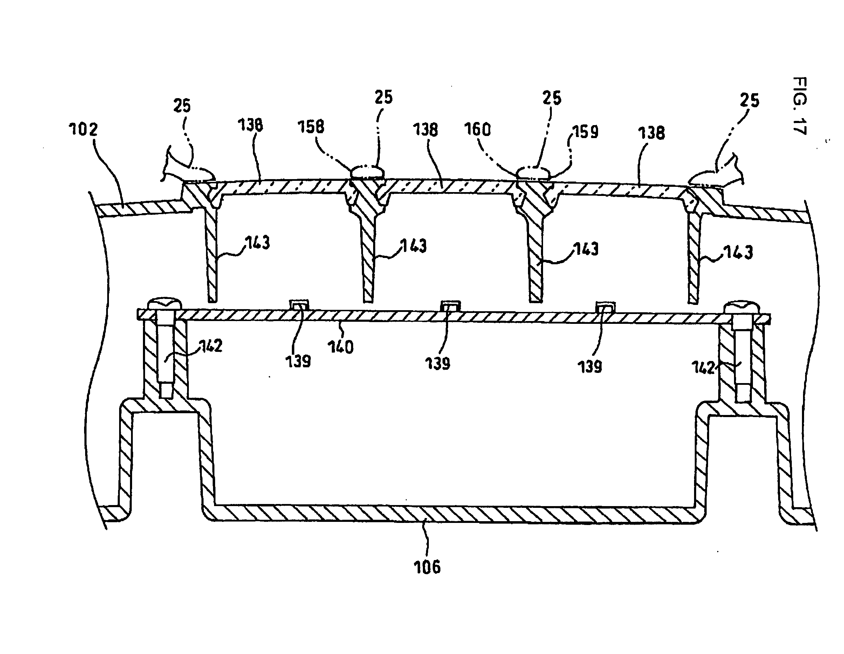

Next, the meter unit 38 and the meter visor 25 will be described in detail. Fig. 11 is a front view of the meter unit 38; Fig. 12, a bottom view of the meter unit 38; Fig. 13, a cross-sectional view between arrows A and A in Fig. 11; Fig. 14, a cross-sectional view between arrows B and B in Fig. 11; Fig. 15, a cross-sectional view between arrows C and C in Fig. 11; Fig. 16, a cross-sectional view between arrows D and D in Fig. 11; and Fig. 17, a cross-sectional view between arrows E and E in Fig. 11.

In Fig. 11, the meter unit 38 whose outer shape is formed substantially in an inverted triangle as viewed from front has an instrument section 91 and the indicator displaying section 68 positioned ahead of the instrument section 91. The instrument section 91 includes a speedometer 92 as a first instrument, a fuel gauge 93 as a second instrument, a cooling water thermometer 94 as a third instrument, a mileage meter 95 and a clock 96 (the mileage meter 95 and the clock 96 are digital indicators). The speedometer 92 is arranged backward at the center of the meter unit 38 (toward the bottom in Fig. 11), the fuel gauge 93, in the right side part of the meter unit 38 toward the front (toward the top right in Fig. 11), the cooling water thermometer 94, in the left side part of the meter unit 38 toward the front (toward the top left in Fig. 11) and the mileage meter 95 and the clock 96, substantially in the middle between the fuel gauge 93 and the cooling water thermometer 94.

Therefore, the meter unit 38 has an overall shape of inverted triangle which is narrower left to right in the rear area where the speedometer 92 is arranged and broader in the front area where multiple instruments are arranged in the left-right direction; in particular, the instrument section 91 is a deformed inverted triangle having display regions 38a and 38b bulging out forward left and right (upward left and right in Fig. 11) to enable the pointers of the fuel gauge 93 and the cooling water thermometer 94 to turn. And between the display regions 38a and 38b, namely between the bulging-out parts, the indicator displaying section 68 is disposed.

In the instrument section 91, an oil abnormality indicator 97, an ABS indicator 98 and an immobilizer indicator 99 are provided in addition to the instruments. Further, on the left side of the upper surface of the meter unit 38, a manipulating element 100 to have the mileage meter 95 accomplish trip displaying is provided, and on the right side a manipulating element 101 for clock setting is provided.

The cases of the meter unit 38 include an upper case 102 and a lower case (to be described afterwards), and the manipulating elements 100 and 101 are, out of the upper case 102, rubber-made components to be disposed in parts 103 and 104 bulging out from the left and right edges toward the speedometer 92. Further, the upper case 102 has a bulging-out part 105 to form the indicator displaying section 68. The bulging-out parts 103, 104 and 105 have horizontal parts (the parts 103 and 104 shown in Fig. 11) bulging inward from flanks of the upper case 102 of the meter unit 38 and reverse parts 134 hanging down, namely over a dial plate 110, from these horizontal parts 103 and 104. Thus the horizontal parts, namely the bulging-out parts 103, 104 and 105, including the reverse parts 134, are formed of opaque members unlike a transparent lens 107 covering the instrument section 91 of the meter unit 38. The bulging-out part 103 made of an opaque member is disposed between the speedometer 92 and the cooling water thermometer 94, while the bulging-out part 104 on the other hand is disposed between the speedometer 92 and the fuel gauge 93. Incidentally, the whole upper case may be an opaque member or only the bulging-out parts 103, 104 and 105 including the reverse parts may be opaque.

On the flanks of the lower case 106 of the meter unit 38, the pair of stays 38A are provided. These stays 38A, opposing the bosses 62 (see Fig. 4) of the rear cover 18, are used when the meter unit 38 is fixed to the rear cover 18 by screwing set-screws (not shown), which can be passed from the stay 38A side, into the bosses 62.

Around the lens 107 of the meter unit 38, the upper part in Fig. 11 (namely the part toward the front part of the body) adjoins the bulging-out part 105, and to the left, right and underneath there are level-gapped surfaces 107a a step lower than the upper surface of the lens 107, and the configuration is such that the edges of the handlebar cover 16 (the sub-covers 19 and the rear cover 18) superpose these level-gapped surfaces 107a.

The rear cover 18 has surfaces 18h (surface adjoining the V-shaped edge 55) continuous to the surface of the meter unit 38 and concaves 18j, a level below these surfaces 18h, in which oil level check openings 49 and 49 for the master cylinder are formed. The front edges 103a and 103b of the bulging-out part 103 and the rear edges 103b and 104b of the bulging-out part 104 of the meter cases are continuous to the curved parts forming the concaves 18j of the rear case 18, namely crest lines 170, 171, 172 and 173 to manifest a unique appearance giving an impression of continuity between the meter unit 38 and the rear cover 18.

The configuration of the meter unit will be further described with reference to cross-sectional views. In Figs. 13 through 16, the cases of the meter unit 38 include the upper case 102, the lower case 106 and the lens 107 fitted to the upper case 102. The upper case 102 is a cylindrical member, namely open in the top and bottom faces, and the top face includes the bulging-out parts 103 and 104 which are among the opaque members referred to above. The lower case 106 is open in the top face, and the open end is joined to the bottom end of the upper case 102. The bottom face of the lower case 106 is not substantially open except that an opening 147 for socket is provided.

The lens 107 and the upper case 102 are joined to each other by insert molding. The stay 73 protrudes upward in front of the lower case 106 (toward the upper right in Fig. 13), and this stay 73 is joined by using the set-screw 75 that penetrates the boss 74 formed in the bridge 72 of the rear cover 18. In this way, the meter unit 38 is caused to be held by the rear cover 18 (the bridge 72) by joining this stay 73 and the stays 38A to the rear cover 18 with set-screws.

The lens 107 is snapped onto the upper case 102, and a circuit board (hereinafter referred to as simply "the board") 108, an inner case 109 and the dial plate 110 are disposed in the space between the upper case 102 and the lower case 106.

Incidentally, with respect to this embodiment, the region in which the lens 107 and the dial plate 110 including a hole or a notch 110a superpose each other in a planar view of the meter unit 38 is defined as the display face region (see Fig. 16). Thus, the lens 107 covers the upper surface of the dial plate 110 to constitute the display face region. To add, in this embodiment, the horizontal parts 103 and 104 bulge out from the upper case 102 toward the lens 107 in the display face region to allow the manipulating elements 100 and 101 to be fitted.

The board 108 is held over ribs 111 protruding upward from the lower case 106 (see Fig. 15 and Fig. 16) and fitted to the lower case 106 with multiple set-screws 112. Incidentally, the set-screws 112 penetrate the board 108 and are screwed into the inner case 109. This causes the board 108 and the inner case 109 to be jointly fastened to the lower case 106. The dial plate 110 is fitted from above to the inner case 109 by using set-screws 113.

Over the board 108, LEDs (light emitting diodes) 114, 115, 116, 117, 118, 119, 120 and 121 are provided, which make clearer the readings on the dial plate 110 by irradiating the dial plate 110 with light from behind.

In Fig. 15, the LED 114, intended to irradiate with light the outer circumference of the speedometer 92, irradiates with light a region limited by an optical waveguide 123 formed in the inner case 109. The LED 115, intended to irradiate with light the inner circumference of the speedometer 92 (namely the central part of the speedometer pointer 124), irradiates with light a region limited by an optical waveguide 125 surrounded by the inner case 109.

In Fig. 15, a socket 146 provided with terminals 145 for supplying power to components on the board 108 from an external power source and outputting detection signals of a switch 132 among others is disposed on the rear surface of the board 108. The socket 146, penetrating the opening 147 for socket formed in the lower case 106, can be coupled with a plug not shown.

In Figs. 14 and 16, the LED 116, intended to illuminate the outer circumference of the cooling water thermometer 94, irradiates with light a region limited by an optical waveguide 126 surrounded by the inner case 109. The LED 117, intended to illuminate the inner circumference of the cooling water thermometer 94 (namely the central part of the cooling water thermometer pointer 127), irradiates with light a region limited by an optical waveguide 128 surrounded by the inner case 109.

In Fig. 14, the LED 118, intended to illuminate the oil abnormality indicator, irradiates with light from behind a transparent area for oil abnormality indication (the oil abnormality indicator shown in Fig. 11) 97 formed in the dial plate 110 through an optical waveguide 129 surrounded by the inner case 109. The LED 119 is a backlight for the mileage meter 95 and the clock 96. Further, the LED 120 irradiates with light the ABS indicator 98 on the dial plate 110 from behind.

In Fig. 13, the LED 121 irradiates with light from behind the immobilizer indicator 99 on the dial plate 110 through an optical waveguide 122 surrounded by the inner case 109.

The speedometer 92 and the cooling water thermometer 94 have drivers 130 and 131 and pointers 124 and 127 respectively turned by the drivers 130 and 131. The fuel gauge 93 also has a similar driver and pointer.

In Fig. 15 and Fig. 16, the board 108 is provided with the switch 132 which detects the operation to cause the speedometer 92 to accomplish trip displaying. Above the detecting section of the switch 132, a rod 133 as an operation transmitting member, held to be movable up and down in the inner case 109, is provided and, above this rod 133, the lower end of the manipulating element 100 is positioned. This configuration causes, when the manipulating element 100 is pressed from above, the manipulating element 100 to be displaced downward to press the rod 133, and this action turns on the switch 132. Though not shown, a similar switch and rod are disposed to match the manipulating element 101 for setting the clock 96.

The bulging-out part 103 of the upper case 102 in which the manipulating element 100 is disposed has a reverse part (namely a vertical wall) 134, and the presence of this vertical wall 134 prevents complexity of the appearance by keeping the manipulating elements of the switch 132, including the lower part of the manipulating element 100, the rod 133 and parts of the rod 133 supporting the inner case 109, from being visible through the lens 107.

A region 38c in which the speedometer 92 is disposed and the region 38a in which the cooling water thermometer 94 is disposed can be distinctly partitioned from each other by the vertical wall 134. Similar reverse parts are also provided in the bulging-out part 104 and the indicator displaying section 68 of the upper case 102 in which the manipulating element 101 is disposed, and have the same function as the vertical wall 134.

The rod 133-supporting part of the inner case 109 has a hole vertically penetrating the dial plate 110. This hole may be a notch (to be described next) formed inward from the outer circumference to facilitate arrangement of the manipulating elements 100 and 101 in the region of the dial plate 110.

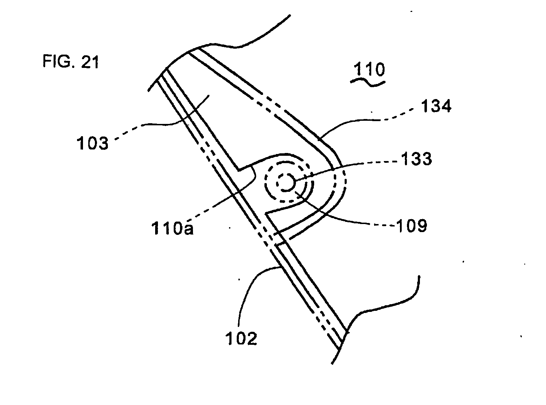

Fig. 21 is a plan of the essential part of the dial plate 110 having a notch. In Fig. 21, the notch 110a is formed in the dial plate 110 from the outer circumference toward the inside (the side where instruments are arranged). A part (supporting member) of the inner case 109 supporting the rod 133 and the rod 133 to be movable up and down is positioned within the notch 110a. As can be understood from Fig. 21, the part of the inner case 109 supporting the rod 133 and the rod 133 are so surrounded by the part 103 bulging out horizontally from the upper case 102, which is an opaque member, and the reverse part 134 extending vertically from the part 103 as not to be visible from outside through the lens 107.

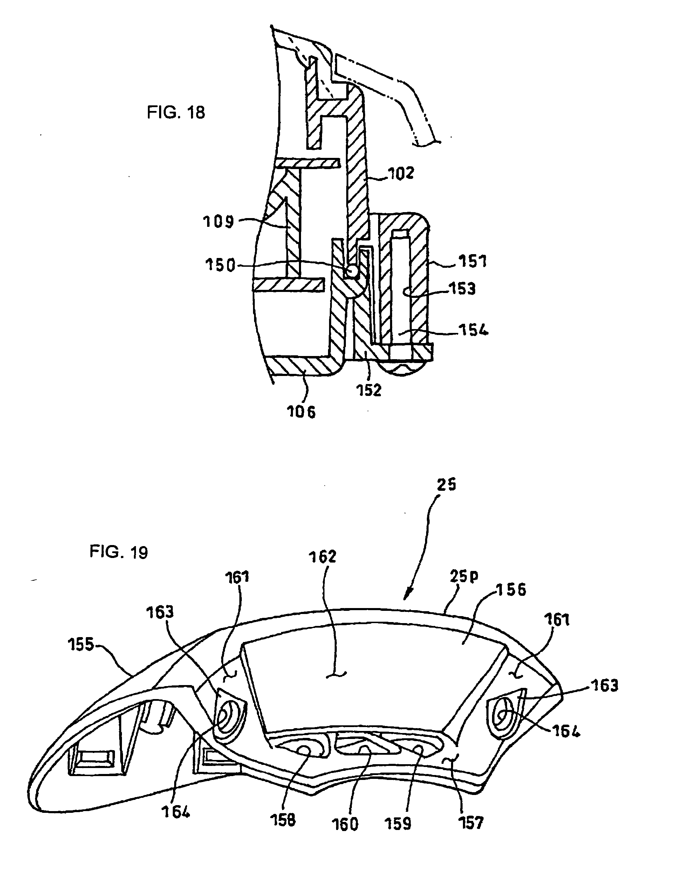

In the bulging-out part 105 of the upper case 102, a vertical wall 135 and a vertical wall 136 farther inside are disposed, and in a region surrounded by these vertical walls 135 and 136 and an external wall 137 of the upper case 102, the indicator displaying section 68 is formed. Namely, in the horizontal part of the bulging-out part 105, a lens 138 is snapped into each of three openings 158, 159 and 160 (only 160 is shown in Fig. 13; see Fig. 17 and Fig. 19 for the rest), and underneath the lenses 138, an LED board 140 is disposed separately from the board 108 and in a higher position than the board 108, and an LED 139 is fitted on the board 140.

To add, as shown in Fig. 11 and Fig. 13, an emblem 141 is disposed on the inner case 109 in a position backward from the speedometer 92 and the immobilizer indicator 99 (downward in Fig. 11 and to the left in Fig. 13). The emblem 141 is so fitted to the bottom of a dent 109a by adhesion or otherwise as to be accommodated in the dent 109a formed in the upper part of the inner case 109. In the position matching the dent 109a, the dial plate 110 is open. And in a state in which the dial plate 110 is fitted to the inner case 109, the upper end face of the dent 109a tightly adheres to the rear surface of the dial plate 110. Therefore, the light of the LED 121 for the immobilizer indicator 99 does not leak toward the emblem 141. When fitting the emblem 141, the emblem 141 can be stuck to the dent 109a through the opening in the dial plate 110 after fitting the dial plate 110 to the inner case 109 and, moreover, the alignment of the emblem 141 is facilitated by utilizing the walls of the dent 109a.

In Fig. 17, the LED board 140 constituting the indicator displaying section 68 is fixed to the lower case 106 with set-screws 142. The lenses 138 and the LEDs 139 are provided for turn signaling and lighting of head lamp indication, respectively. The upper case 102 is provided with multiple vertical walls 143 for limiting the areas for turn signaling and lighting of head lamp indication. And the meter visor 25 having openings 158, 159 and 160 are so fitted as to cover the indicator displaying section 68 except the parts opposing the lenses 138 above. Thus the openings are so disposed matching the indicators 69 through 71, 158 and 159 as to allow the turn signal indicators 69 and 70 to be seen through and 160 to allow the lighting state indicator 71 to be seen through.

In Fig. 13 through Fig. 17, the meeting part between the upper case 102 and the lower case 106 has, with reference to Fig. 16 for instance, a reduced width part 148 formed on the lower edge of the upper case 102, a groove 149 so formed on the upper edge of the lower case 106 as to hold the reduced width part 148 from both sides, and a seal 150 that is accommodated in the bottom of the groove 149 and, in the assembled state, pressed by the reduced width part 148 toward the bottom of the groove 149.

Fig. 18 is a cross-sectional view between arrows F and F in Fig. 11 and shows the joining part between the upper case and the lower case. In Fig. 18, a boss 151 bulging out toward the outer circumference from the upper case 102 and extending toward the lower case 106 is formed, and a bracket 152 which extends down from the upper edge of the lower case 106 and whose lower end horizontally bulges outward. The lower end face of the boss 151 opposes the upper surface of the horizontally bulging-out part of the bracket 152. A screw hole 153 extending up and down is formed in the boss 151, and a hole permitting vertical penetration of a set-screw 154 is formed in the horizontally bulging-out part of the bracket 152. This configuration enables, when the set-screw 154 passed from bottom to top in the horizontally bulging-out part of the bracket 152 is screwed into the screw hole 153 of the boss 151, the upper case 102 and the lower case 106 to be assembled with each other in a sealed state via the seal 150. Incidentally, the bracket 152 including the horizontally bulging-out part and the set-screw 154 are also shown in Fig. 12.

Fig. 19 is a perspective view of the rear left part of the meter visor 25. The shape of the meter visor 25 will be further described with reference to Fig. 4 and Fig. 13 together. The meter visor 25 has a peak 25p in the vicinity of the border line 40 between the front cover 17 and the rear cover 18, and includes a front surface 155 inclining down forward from the peak 25p, a rear surface 156 inclining down backward from the peak and a rear edge 157 bulging out from the rear surface 156 toward the meter unit 38 to constitute a cover of the indicator displaying section 68. The rear surface 156 is arranged substantially vertically, and the rear edge 157 is a surface arranged substantially in parallel to the dial plate 110 of the meter unit 38. The rear edge 157 has openings 158, 159 and 160 having shapes matching the top faces the turn signal indicators 69 and 70 and the lighting state indicator 71.

The rear surface 156 includes left and right side parts 161 and 161 and a central part 162 sandwiched between the two side parts 161 and 161, and the central part 162 constitutes a dent a level lower than and ahead of the two side parts 161 and 161. And a region ahead of the openings 158 through 160 in the rear edge 157 extends as far as to the central part of the rear surface 156, namely the dent 162. To add, holes 163 for inserting the set-screws 66 and 66 and seats 164 are formed in the two side parts 161 and 161.

In this way, the presence of the dent 162 a level lower than and ahead of the indicator displaying section 68 can prevent the rear surface 156 of the meter visor 25 from intercepting the field of view when one looks at the indicator displaying section 68 and thereby enhance the visibility of indicators.

Fig. 20 is a vertical cross-sectional view of the head lamp 20. The head lamp 20 has, as described above, the reflector 56, the bulb 57, the lens 58, and the head lamp housing 78 accommodating the bulb 57 and the reflector 56. The bracket 79 protrudes at the top of the head lamp housing 78, and the boss 67 formed in the front cover 17 opposes the front surface of the bracket 79. A rubber bush boss 174 is snapped into the bracket 79, and a set-screw 175 is screwed into the boss 67 through a hole formed in this rubber bush boss 174. Brackets similar to the bracket 79 bulge out to the left and right of the head lamp housing 78, and are joined to the bosses 63 by using set-screws. The rear end of the lens 58 is joined to the front end of the head lamp housing 78.

The reflector 56 has an aiming shaft 176 extending to the left and right, and the reflector 56 and the bulb 57 supported by the reflector 56 are supported to be oscillable up and down by the aiming shaft 176 in the head lamp housing 78. Ahead of the head lamp housing 78, an aiming bolt 177 is screwed in, and the tip of this aiming bolt 177 is formed in a bulb. On the other hand, a bracket 178 bulging downward from underneath the reflector 56 is formed, and the bulb at the tip of the aiming bolt 177 is joined to a bulb receptacle 179 on this bracket 178 to form a universal joint.

In this configuration, by moving the aiming bolt 177 out of and into the head lamp housing 78, the reflector 56 can be oscillated up and down centering on the aiming shaft 176 in accordance with feeding by the aiming bolt 177, and the irradiating direction of the head lamp 20 can be adjusted accordingly. In the drawing, oscillated positions of the reflector 56 are indicated in two-dot chain lines.

A cap 180 to cover the part behind the bulb 57 is fitted in the rear part of the head lamp housing 78. Underneath the cap 180, a cylindrical cable holder 181 which permits penetration of a cable (not shown) for feeding power to the bulb 57 is formed.

Although this invention has been described so far with reference to a specific embodiment thereof, obviously the invention is not limited to this embodiment, but those skilled in the art can modify or apply it without deviating from the scope of claims. For instance, the motorcycle is not limited to a vehicle of an internal combustion engine-driven type, but the objects of application also include handlebars of a hybrid vehicle using an internal combustion engine and an electric motor or of an electromotive vehicle. Therefore, the types and numbers of switches disposed on the handlebar cover 16 or of instruments and indicators provided on the meter unit 38 can be varied to be suitable for the type of the vehicle.

The present invention is directed to reduce the meter unit in size and to improve the manipulating ease of switches disposed in the meter unit.

A meter unit 38 is arranged in an opening for meters disposed in a handlebar cover 16 of a motorcycle 1. A lens 107 joined to the upper part of an upper case 102 of meter cases covers the top face of a dial plate 110. The upper case 102 includes opaque parts 103 and 104 bulging out toward the lens 107, and switch manipulating elements 100 and 101 are fitted to the opaque parts 103 and 104. The dial plate 110 is common to multiple instruments 92, 93 and 94, and the display region of the multiple instruments is partitioned by the opaque parts. The switch manipulating elements 100 and 101 are intended for manipulating switches 132 on a board 108 positioned lower than the dial plate 110. The rear flanks of the switch manipulating elements are covered by reverse parts 134 of the opaque parts.

## Claims

1. A motorcycle comprising a meter unit (38) comprising:
meter cases (102, 106);
a dial plate (110) of instruments disposed in the meter cases (102, 106);
digital displays (95, 96) disposed on the dial plate (110); and
a lens (107) fitted to the meter cases (102, 106) and covering an upper surface of the dial plate (110) to constitute a display face region,
wherein: the meter cases (102, 106) are arranged in an opening for meters provided in a handlebar cover (16) covering a handlebar (7) for steering the vehicle;
the meter cases (102, 106) include opaque parts (103, 104) that extend toward the lens (107) and extend into the display face region; and
switch manipulating elements (100, 101) for varying the mode of displaying on the digital displays (95, 96) are fitted to the opaque parts (103, 104),
**characterized in** the
the switch manipulating elements (100, 101) are intended for use in manipulating switches (132) which are provided on a circuit board (108) arranged underneath the dial plate (110), the meter unit (38) further comprising rods (133) positioned below lower ends of the switch manipulating elements and above detection sections of the switches (132) to intervene between the switch manipulating elements (100, 101) and the switches (132); and
the opaque parts (103, 104) include reverse parts (134) which are turned over toward the dial plate (110) and cover flanks of the rods (133).

2. The motorcycle according to Claim 1.
wherein: the meter cases (102, 106) include a cylindrical upper case (102) including the opaque parts and a lower case (106) which is joined to a bottom end of the upper case (102) and whose upper surface is open; and
the lens (107) is joined to an upper end of the upper case (102).

3. The motorcycle according to Claim 1 or 2, wherein: the dial plate (110) is common to multiple instruments (92, 93, 94) and display regions of the multiple instruments (92, 93, 94) are partitioned by the opaque parts.

4. The motorcycle according to Claim 1, wherein: notches (110a) are disposed in parts of the dial plate (110), and the rods (133) and supporting members (109) thereof extend vertically through the notches (110a).

5. The motorcycle according to Claim 3,
wherein: the multiple instruments include a first instrument (92) and second and third instruments (93, 94) arranged apart from each other left and right ahead of the first instrument (92); and
one of the opaque parts (103, 104) is disposed between the first instrument (92) and the second instrument (93) and another of the opaque parts is disposed between the first instrument (92) and the third instrument (94).

6. The motorcycle according to any of Claims 1 through 5,
wherein: the handlebar cover (16) has oil level check openings (49) for a brake master cylinder;
the oil level check openings (49) are disposed at the bottom of dents (18j) formed in the handlebar cover (16); and
external shapes of the opaque parts (103, 104) are continuous to surrounding crest lines (170,171,172,173) constituting the dents (18j).

## Patentansprüche

1. Kraftrad, umfassend eine Messgeräteeinheit (38), umfassend:
Messgerätegehäuse (102, 106);
ein Ziffernblatt (101) von Instrumenten, welche in den Messgerätegehäusen (102, 106) angeordnet sind;
Digitalanzeigen (95, 96), welche auf dem Ziffernblatt (110) angeordnet sind; und
eine Linse (107), welche an den Messgerätegehäusen (102, 106) angebracht ist und eine obere Fläche von dem Ziffernblatt (110) abdeckt, um einen Anzeigeflächenbereich zu bilden,
wobei: die Messgerätegehäuse (102, 106) in einer Messgeräteöffnung angeordnet sind, welche in einer einen Lenker (7) zum Lenken des Fahrzeugs abdeckenden Lenkerabdeckung (16) vorgesehen ist;
die Messgerätegehäuse (102, 106) opake Teile (103, 104) umfassen,
welche sich zu der Linse (107) erstrecken und sich in den Anzeigeflächenbereich hinein erstrecken; und
Schalterbedienungselemente (100, 101), um den Anzeigemodus auf den Digitalanzeigen (95, 96) zu verändern, an den opaken Teilen (103, 104) angebracht sind,
**dadurch gekennzeichnet,**
**dass** die Schalterbedienungselemente (100, 101) zur Verwendung bei einer Bedienung von Schaltern (132) bestimmt sind, welche auf einer unterhalb des Ziffernblatts (110) angeordneten Leiterplatte (108) vorgesehen sind, wobei die Messgeräteeinheit (38) ferner Stäbe (133) umfasst, welche unterhalb von unteren Enden von den Schalterbedienungselementen und oberhalb von Erfassungsabschnitten von den Schaltern (132) angeordnet sind, um zwischen die Schalterbedienungselemente (100, 101) und die Schalter (132) zu treten; und
die opaken Teile (103, 104) umgedrehte Teile (134) umfassen, welche zu dem Ziffernblatt (110) hin umgedreht sind und Flanken der Stäbe (133) abdecken.

2. Kraftrad nach Anspruch 1,
wobei: die Messgerätegehäuse (102, 106) ein zylindrisches oberes Gehäuse (102), welches die opaken Teile umfasst, und ein unteres Gehäuse (106) umfassen, welches mit einem unteren Ende von dem oberen Gehäuse (102) verbunden ist und dessen Oberseite offen ist; und
die Linse (107) mit einem oberen Ende von dem oberen Gehäuse (102) verbunden ist.

3. Kraftrad nach Anspruch 1 oder 2, wobei: das Ziffernblatt (110) gemeinsam von den mehreren Instrumente (92, 93, 94) benutzt wird und Anzeigebereiche von den mehreren Instrumenten (92, 93, 94) durch die opaken Teile unterteilt sind.

4. Kraftrad nach Anspruch 1, wobei Aussparungen (110a) in Teilen von dem Ziffernblatt (110) angeordnet sind und die Stäbe (133) und Tragelemente (109) davon sich vertikal durch die Aussparungen (110a) erstrecken.

5. Kraftrad nach Anspruch 3,
wobei: die mehreren Instrumente ein erstes Instrument (92) und zweite und dritte Instrumente (93, 94) umfassen, welche getrennt voneinander links und rechts vor dem ersten Instrument (92) angeordnet sind; und
eines von den opaken Teilen (103, 104) zwischen dem ersten Instrument (92) und dem zweiten Instrument (93) angeordnet ist und ein anderes von den opaken Teilen zwischen dem ersten Instrument (92) und dem dritten Instrument (94) angeordnet ist.

6. Kraftrad nach einem der Ansprüche 1 bis 5,
wobei: die Lenkerabdeckung (16) Ölniveauüberprüfungsöffnungen (49) für einen Hauptbremszylinder hat;
die Ölniveauüberprüfungsöffnungen (49) an einem Boden von in der Lenkerabdeckung (16) ausgebildeten Vertiefungen (18j) angeordnet sind; und
äußere Formen von den opaken Teilen (103, 104) mit umgebenden Kammlinien (170, 171, 172, 173) kontinuierlich sind, welche die Vertiefungen (18j) bilden.

## Revendications

1. Motocyclette comprenant une unité de compteurs (38) comprenant :
des boîtiers de compteurs (102, 106) ;
un cadran (110) d'instruments disposés dans les boîtiers de compteur (102, 106) ;
des afficheurs numériques (95, 96) disposés sur le cadran (110) ; et
une lentille (107) montée sur les boîtiers de compteurs (102, 106) et recouvrant une surface supérieure du cadran (110) pour constituer une région de face d'affichage,
dans laquelle : les boîtiers de compteurs (102, 106) sont agencés dans une ouverture pour les compteurs réalisée dans un capot de guidon (16) recouvrant un guidon (7) pour diriger le véhicule ;
les boîtiers de compteurs (102, 106) comprennent des parties opaques (103, 104) qui s'étendent vers la lentille (107) et s'étendent dans la région de face d'affichage ; et
des éléments de manipulation de commutateurs (100, 101) pour modifier le mode d'affichage sur les afficheurs numériques (95, 96) sont montés sur les parties opaques (103, 104),
**caractérisée en ce que**
les éléments de manipulation de commutateurs (100, 101) sont destinés à être utilisés pour manipuler des commutateurs (132) qui sont prévus sur une carte de circuit (108) agencée au-dessous du cadran (110), l'unité de compteurs (38) comprenant en outre des tiges (133) positionnées au-dessous des extrémités inférieures des éléments de manipulation de commutateurs et au-dessus de sections de détection des commutateurs (132) pour s'étendre entre les éléments de manipulation de commutateurs (100, 101) et les commutateurs (132) ; et
les parties opaques (103, 104) comprennent des parties inversées (134) qui sont retournées vers le cadran (110) et recouvrent les flancs des tiges (133).

2. Motocyclette selon la revendication 1,
dans laquelle : les boîtiers de compteurs (102, 106) comprennent un boîtier supérieur (102) cylindrique comprenant les parties opaques et un boîtier inférieur (106) qui est joint à une extrémité inférieure du boîtier supérieur (102) et dont la surface supérieure est ouverte ; et
la lentille (107) est jointe à une extrémité supérieure du boîtier supérieur (102).

3. Motocyclette selon la revendication 1 ou 2, dans laquelle : le cadran (110) est commun à de multiples instruments (92, 93, 94) et les régions d'affichage des multiples instruments (92, 93, 94) sont séparées par les parties opaques.

4. Motocyclette selon la revendication 1, dans laquelle : des encoches (110a) sont disposées dans des parties du cadran (110), et les tiges (133) et les éléments de support (109) de celles-ci s'étendent verticalement à travers les encoches (110a).

5. Motocyclette selon la revendication 3,
dans laquelle : les multiples instruments comprennent un premier instrument (92) et des deuxième et troisième instruments (93, 94) agencés espacés l'un de l'autre à gauche et à droite en avant du premier instrument (92) ; et
l'une des parties opaques (103, 104) est disposée entre le premier instrument (92) et le deuxième instrument (93) et une autre des parties opaques est disposée entre le premier instrument (92) et le troisième instrument (94).

6. Motocyclette selon l'une quelconque des revendications 1 à 5,
dans laquelle : le capot de guidon (16) comporte des ouvertures de contrôle de niveau d'huile (49) pour un maître-cylindre de frein ;
les ouvertures de contrôle de niveau d'huile (49) sont disposées dans le fond de creux (18j) formés dans le capot de guidon (16) ; et
les formes externes des parties opaques (103, 104) sont continues pour entourer les lignes de crête (170, 171, 172, 173) constituant les creux (18j).
